# EUROPEAN PATENT APPLICATION

(11) **EP 1 085 715 A2**
(43) Date of publication of application: **21.03.2001**
(21) Application number: 00103922.1
(22) Date of filing: 24.02.2000
(51) Int. Cl.: H04L 29/06, G06F 17/30

(54) **Providing state information in a data communication protocol**

(30) Priority: 28.08.1999 EP 99116993; 13.10.1999 US 417091
(71) Applicant: Sevenval AG, 50667 Köln (DE)
(72) Inventor: Walkowiak, Olaf, 45145 Essen (DE); Sponagl, Paul, 50733 Köln (DE)
(74) Representative: Dendorfer, Claus, Dr.

(57) **Abstract**

In a method for providing state information in a data communication protocol, said state information being provided between a client and a server site, said server site being accessible at each of a cluster of site names, one site name of said cluster of site names is used for accessing said server site, said site name containing the encoded state information. A computer program product and an apparatus comprise corresponding features. The invention creates a way of providing state information in a stateless data communication protocol with very little effort.

## Description

The present invention concerns the field of data transmission via data communication protocols. The data may, for example, include hypertext documents, and the data communication protocol may be an internet protocol used in the World Wide Web (WWW). Use of the invention is intended for all applications in which the provision of state information is desired, in particular in the context of Internet and/or stateless data communication protocols. For example, possible applications of the present invention are in the fields of electronic commerce or online databases or online dictionaries or online games.

EP 0 812 088 A2 discloses a method for preserving state in a stateless network protocol. In this method, all documents sent to a client are modified by embedding the state information in the hyperlinks of the documents. In each modified hyperlink, the state information is encoded as a CGI call in the file path specification of the hyperlink. This method requires an elaborate converter program for modifying the documents requested by the client. The converter program must parse these documents and modify the hyperlinks contained therein. This process requires a high amount of computing power. Furthermore, it is difficult to adapt the converter program to new document markup languages or complex document structures.

Another method wherein the state information is embedded into the file path specification of all qualifying hyperlinks is described in European patent application no. 98 120 671.7 filed by the present inventors on 05 November 1998. The entire contents of this earlier application are hereby incorporated by reference. This method also requires that the server is customized in a rather complex way.

Further methods for embedding the state information in hyperlink file path fields are known. These methods use database functions on the side of the server to individually create each document delivered to a user according to predetermined rules. Defining these rules and programming the database are very complex tasks that require the expensive work of specialist programmers.

It is further known to use so-called "cookies" for storing state information in the user's computer under control of the server. This method, however, is not very popular because of the alleged or real risk that data stored in the user's computer is accessed or modified without authorization. For this reason many users choose to configure their browser in a way that no cookies will be accepted.

An object of the present invention therefore is to avoid the above-mentioned problems. A further object is to create a way of providing state information in a stateless data communication protocol with very little effort. Yet a further object is to keep the necessary programming work at a minimum white allowing maximum flexibility. Still a further object is that the invention should be usable with a wide variety of data communication protocols, server programs, and document markup languages. A further object is that use of the invention should keep the server load low when processing user requests. Yet a further object of preferred embodiments of the invention is to allow embedding of data obtained or derived from external data sources into the data transmitted to the client.

According to the invention, these and other objects are solved by the method, the computer program product and the apparatus defined in the independent claims. The dependent claims concern preferred embodiments of the invention.

The invention is based on the fundamental idea to encode the state information not in a file path specification of a hyperlink, but in the site name. This is a radical departure from prior art approaches and practice. Up to now, site names have been considered as a rare commodity, such that the seemingly very wasteful idea of encoding state information in site names has not been considered. The present invention overcomes this prejudice by teaching several ways for efficient data communication where state information is encoded in site names, wherein each of a cluster of site names designates the same server site.

In other words, the present invention teaches to make a single server site accessible by a variety ("cluster") of site names, wherein each possible state information corresponds to at least one site name in the cluster. The state information is provided to the server site each time the server site is accessed using the full site name, and the state information is preserved between subsequent access actions as long as the full site name is used by the client. The server may, in some embodiments, extract the state information from the received site name for immediate or possible later use. In the example of WWW servers and browsers, the site name may be an internet host name comprising an internet domain and further information. Since the normally used internet browsers store the full site name, the state information is provided to the server each time an internet page at the server site is accessed.

Thus the present invention offers a very convenient and flexible way of providing state information. The programming work needed to implement the present invention is extremely small. A few lines of code are sufficient to configure the communication network and to modify well-known server programs for performing the method of the invention. The client program and the accessed documents do not have to be modified at all.

In the terminology used herein, a "site" is a location at which a plurality of documents or files or other data may potentially be accessed. This means that the path name of a single document is not considered to refer to a site. An example of a site is an internet host name, i.e., a hierarchically structured domain. Even if no documents are actually present, the possibility exists to store and/or access a plurality of documents at the server site addressed by the host name, said documents being distinguished by their respective file or path names or other logical resource information.

A "stateless protocol", which is used in preferred embodiments of the invention, is in particular a data transmission protocol that does not have the notion of "connections" and therefore does not provide direct information about the beginning, the continuation or the end of a user session. In preferred embodiments of the invention, an internet protocol like, for example, the HTTP protocol (hypertext transfer protocol) is used. The HTTP protocol is defined in the proposed standard document RFC 2616 by R. Fielding et al. This document is available at the internet address www.w3c.org, and its contents are hereby incorporated in their entirety.

If the present invention is used in the context of internet communication wherein a plurality of information pages is accessed by the user while maintaining the state information, individual users and/or user sessions may be distinguished and identified. This is helpful even if the accessed documents are not modified in response to the state information because it allows tracking of the path the user chooses when browsing through the available documents (so-called "session tracking").

In preferred embodiments of the present invention, however, the state information influences the response of the server in some way. This influence may be, for example, that the server outputs different pages in response to the state information (e.g., an order confirmation page if address data is available for the user identified by the state, and an address entry form otherwise), or that information in a page is modified in accordance with the state information (e.g., the total price of all goods in a shopping basket is shown). In such embodiments, some programming may of course be necessary to implement the desired dependency of the information provided by the server from the state information. In some embodiments of the invention the response is based on information obtained from a further data source whose site name is in turn defined by the state information (and possibly further information like the contents of a site name list or database).

Even if the transmitted documents are modified to some extent depending on the state information, the computing load put on the server for providing a document is usually very low. This is in complete contrast to the method known from EP 0 812 088 A2 where each delivered document must be parsed and analyzed in order to find and modify all hyperlinks.

The present invention may be used in connection with the transmission of all kinds of data, but applications are preferred in which documents and in particular hypertext documents are concerned. Such hypertext documents may be written in any kind of markup language like SGML (standard generalized markup language) or HTML (hypertext markup language) or XML (extensible markup language). Furthermore, the documents may be generated by any mechanism including script processing of PHP (see www.php.net) or ASP (active server page) code. The state-preserving hyperlinks in the documents must of course be written in a way that the encoded state information is not destroyed. For example, hyperlinks pointing to the same server site will not include a host name, but just a (absolute or relative) file path specification (unless the state shall be deleted when the hyperlink is followed).

Again, the present invention has substantial advantages over the method known from EP 0 812 088 A2 since the transmitted documents do not have to be analyzed and modified for enabling the state preservation feature. Therefore, no special provisions are normally required for using other markup or scripting languages or document authoring tools. This is especially important in the internet field because of its rapid development and the multitude of presently available and possible future extensions. The present invention can readily be used with streaming data formats and extensions and plugins like that known under the trademarks Flash and Shockwave available at www.macromedia.com.

In preferred embodiments of the invention, the server site is identified by an address, preferably an Internet IP address, and a nameserver is used for translating the site name referring to the server site to the corresponding address. The nameserver is preferably configured in a way that all site names of the site name cluster are mapped to the same address, such that the same server site is accessed irrespective of the encoded state information. When the server site is contacted, the site name containing the encoded state information is preferably transmitted to the server in a header field according to the HTTP protocol. This header field may the host header field or the referrer header field or another suitable header field. The server may then extract and decode the state information from the full site name. This preferred embodiment, of course, requires that the server site is configured such that communication requests carrying any site name from the site name cluster are accepted.

It is one of the merits of the inventors to have shown that the configuration of both the nameserver and the server site in the way described in the previous paragraph are possible with very little programming effort. This is especially true in preferred embodiments in which a hierarchical site name system is used. In this case, it is preferred that all site names in the cluster of site names coincide with respect to the highest hierarchy level and possibly one or more lower hierarchy levels. For example, the top and second level part of an internet host name may be used to identify the server site, while lower level parts are used for holding the state information. It is also possible to use some levels of the hierarchical naming scheme for both purposes at the same time. For example, a single server site may be designated by a few different second level domain names, and the choice of the actual name out of this predetermined set of name portions may confer the whole or parts of the state information. In preferred embodiments, the number of possible states is very high (e.g., more than 100 or more than 10000 or more than 1000000), such that it would not be possible in practice to register a corresponding number of second level domain names with a centralized registration authority.

Generally, the first communication request issued by the client may already contain the state information encoded in the site name. For example, the user may have bookmarked the full site name (including the state information) in an earlier session, or he/she may have received it by e-mail, or he/she might have copied it from a printed advertisement. Means are provided in preferred embodiments of the invention for determining whether or not a valid state information is present in the site name received at the server site. If no valid state information is present (e.g., because the lifetime of the state information has expired or because the state information has an invalid format or because the user typed in a "standard" site name not containing any state information), a new identifying state information is created in some embodiments. A redirection instruction to the site name containing the new state information may then be sent to the client. Additionally or as an alternative, the user may be asked to register, e.g., by filling out some registration form.

The state information may be any kind of information in any encoding. In preferred embodiments of the invention, the state information is an identifier associated with the user or with the current user session. This identifier may be used for accessing a user record contained in a database at the side of the server. Full personal information about the user and/or the current session may be stored in the user record. This kind of identifying status information, which acts as a key to a further database access, is normally invariable during a plurality of request/reply events or even during the whole user session or the whole time the user is registered with a service provider. In some embodiments, however, the state information is modified during a user session in order to reflect, for example, the contents of a shopping basket or a changing score in an online game. Arbitrarily long user sessions are possible, and the state information may be changed as often as desired. Any change of the state information corresponds to a change of the current site name within the site name cluster.

The state information is not restricted to being merely an identifier of the user or the current user session. Generally, any kind of data in any encoding may be contained in the state information. The encoding may be such that the state information is expressed in a very compact way within the limitations of the character set permissible in site names. However, it is also possible to use an encoding that presents some meaningful information to the user when the site name (containing the encoded state information) is shown in the URL field of common browsers. For example, the user might prefer a human-readable encoding of the state information. In other applications, a human-readable encoding (that may be easy to guess or memorize) should be avoided in order to prevent unauthorized access.

In some embodiments, meaningful text (e.g., advertising slogans or phrases containing human-readable information) is used to encode the state information. For example, a numerical state code N could be represented by the N-th text phrase contained in a predetermined codebook. It is also possible to use a variety of different phrases for encoding one and the same state information. For example, the state information may be encoded very compactly, and some text message may be put in front of it. Common internet browsers display the site name in a so-called "URL line". If the site name is longer than the length of the "URL line", only the initial portion of the site name is shown. Thus, by prepending a comparatively long text message in front of the site name, only the text message is shown to the user, and the possibly confusing state information (as well as further parts of the site name) may effectively be hidden. The idea of using a site name containing some meaningful text portion that plays no role in designating the actual server site is also considered as an invention in its own right, regardless of whether of not state information is also encoded into the site name.

Preferred examples of a human-readable encoding are that the state information contains the site name of an additional data source from which information required by the user is obtained, or that the state information contains a command-like identifier specifying the mode of operation of the server site (e.g., an anonymizer mode or an internet shop mode comprising a cookie repository). It is also possible to use encoded site names in the state information. Such encoded site names may still be user-readable since meaningful words may be used for the encoding (e.g., "EPO" for "www.european-patent-office.org" or "Always-buy-ACME-products" for "www.acme.com"). However, encoded site names may also be in a compact, non user-readable form, and they may or may not comprise additional information like a session identifier. The actual site name of the additional data source may be fully contained in the encoded site name in a compressed representation, or it may be determinable by looking up an entry defined by the state information in a database or a list of site names. It is also possible to associate each session with a site name of an additional data source, and to determine this site name on the basis of a session identifier comprised in the state information.

In embodiments in which an additional data source is present, the information obtained therefrom may be processed by the server site and may be incorporated into the replies sent to the client in any way. The server site acts, in these embodiments, as an intermediary between the client and the additional data source. This configuration offers a wide variety of new applications, which may be implemented with comparatively little programming effort. The server site may filter data flowing in either direction in any desired way, and it may also integrate this data with data stored locally at the server site or obtained from yet another data source. In some embodiments, data obtained from the data source is presented to the user in a way that is indistinguishable from the presentation of the local data of the server site. This effect, that has hitherto required the use of so-called frames, is now possible even for browsers that do not support frames.

A variety of further applications is envisaged in which the possibilities of filtering and processing the information flow between the client and the data source are used. These applications include monitoring and recording of user actions, for example for establishing a user profile or for registering clicks onto advertising banners. It is also possible to use the state information contained in the site name as a search term for an internet search. For example, a user accessing the site name "travel.brazil.search.foo.de" (wherein "travel.brazil.search" is the state information comprising the search words "travel brazil" and the command identifier "search") could be presented with a selection of links to and/or information from travel agencies specializing in Brazilian destinations. A further example is the filtering of data by the intermediary server site for providing an anonymizing functionality. Such an embodiment will be explained in detail later. A further example in which the filtering of information is a major aspect is a functionality that removes advertising banners from hypertext pages accessed by the user through the intermediary server site.

In some embodiments the intermediary server site may also act as a data repository for user. For example, the server site may accept cookies from the data source and store them for the user. Such an embodiment of the invention will be described later. The server site may also store personal data of the user for convenient insertion into forms. For example, the server site may be configured such that it always enters the user's name into a form field "Name" as a default value. The personal data may be obtained from the user in a registration process, or it may be gathered whenever the user has completed a form and sends its contents back to the data source via the intermediary server site. The agreement of the user is, of course, necessary for this type of processing.

Yet a further possible application of the present invention is that of registering the contents of internet sites with known search engines. Especially large internet shop sites, which use dynamically generated product pages, have difficulties in being represented in search engines since there are no static hypertext pages to which a search engine entry could point. Using the present invention, it is possible to generate such static pages and to present them to search engine robots at a site name comprising an identifying state information. The products shown on these pages will then be listed by the search engine under the site name containing the state information. If a user accesses this site name, the requested information is identified, and a corresponding hypertext page is assembled and shown to the user on the basis of information obtained from the data source. Again, the page generated by the intermediary server site may be modified with respect to the original data obtained from the data source, e.g., by including additional advertising banners.

In preferred embodiments, the site name may be an Internet host name. This is a hierarchical name structure comprising a top level domain, a second level domain and possibly further, lower level domains. Often the top and the second level domains are just referred to as "domain". An internet host name does not contain any file path part specifying a file name within the sever site identified by the host name. For example, the internet URI http://www.foo.de/prd.html comprises the host name www.foo.de (containing the domain foo.de) and the file path specification (in this case a simple file name) prd.html. The different parts of an internet URI (uniform resource identifier) are described in more detail in the HTTP standard mentioned above.

In other preferred embodiments, the site name may be an internet IP address or IP number according to version 6 of the IP standard containing more than 32 bits. The IP numbering system may also be considered as a hierarchical naming scheme. In other preferred embodiments, however, all site names in the site name cluster are mapped to a single (or at most a few) IP numbers. This is especially preferred if IP numbers according to the present versions of the IP standard are used since the number space for such 32 bit IP numbers is rather limited.

The present invention may also be used in some embodiments for maintaining state information when the user changes from one server site to another server site. In this case, the part of the site name identifying the server site is changed, but the part containing the state information is maintained. For example, a shopping site may contain a link to an internet payment agency, and details of the payment may be encoded in the site name of this link.

The state information may, in some embodiments, comprise validity information like a verification number or some timestamp or some data defining the validity period of the state information. The state information may be considered invalid if the predetermined validity period has expired. If there is no lifespan limitation, the state information may be regarded as a "timeless cookie" that can be used over and over again if the user, for example, bookmarks an URI containing the state information.

The computer program product and the apparatus of the present invention preferably also comprise the features mentioned above and/or in the dependent claims in connection with the inventive method.

Further objects and advantages will become apparent from the drawings and the following detailed description.

Several sample embodiments of the present invention and several further alternative embodiments will now be explained in more detail. Reference is made to the schematic drawings, in which:
Fig. 1 is a representation of two hypertext documents,
Fig. 2 is a block diagram of some of the components involved when accessing a hypertext document,
Fig. 3 is a flow diagram of a prior art method for data transmission using a stateless data communication protocol,
Fig. 4a and Fig. 4b are message sequence diagrams of a first sample embodiment of the present invention in which state information is provided and preserved,
Fig. 5 is a block diagram similar to that of Fig. 2 for further sample embodiments of the invention in which the site name of a remote data source is included in the state information,
Fig. 6a and Fig. 6b are message sequence diagrams of an "anonymizer" function of the sample embodiment shown in Fig. 5, and
Fig. 7a to Fig. 7c are message sequence diagrams of a "cookie repository" function of the sample embodiment shown in Fig. 5.

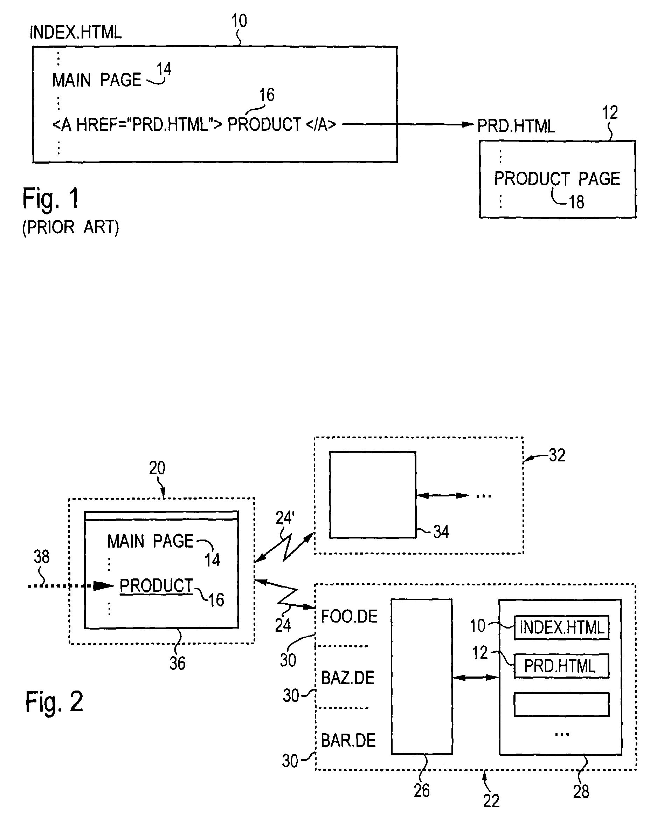

Fig. 1 depicts two hypertext documents 10, 12 having the filenames "index.html" and "prd.html", respectively. Both hypertext documents 10, 12 are written in the page description language HTML, but any other markup language that may or may not comprise hyperlinks may also be used. The first hypertext document 10 ("index.html") comprises contents 14 and a hyperlink 16 pointing to the second hypertext document 12 ("prd.html"), which in turn comprises contents 18. The hyperlink 16 consists of an anchor tag 〈A ...〉 ... 〈/A〉 containing identifying text ("product") and a HREF attribute. The value of the HREF attribute is a file name or a file path specification, i.e. an address not containing a host name. The data structures depicted in Fig. 1 are known per se and are described in detail, e.g., in the book "The HTML Sourcebook" by Ian S. Graham, John Wiley & Sons, New York, 1995.

Fig. 2 shows an arrangement generally used for accessing and viewing hypertext documents. A client 20 is provided by a general purpose computer of a user executing a well-known browser program. For example, the browser program may be one of the internet browsers available under the trademarks "Netscape Navigator" or "Microsoft Internet Explorer", and the user's computer may be a standard personal computer. The client 20 accesses a server 22 via a computer network 24, for example the internet. A stateless communication protocol, in the present sample embodiment the HTTP protocol supported by TCP, is used for data communication. In this protocol, requests sent by the client 20 are answered by replies of the server 22. The protocol is called "stateless" because subsequent requests and replies do not unambiguously refer to each other (the HTTP referer header may be ambiguous).

The server 22 is a powerful general purpose computer having a hardware and software configuration known per se. For example, the server 22 may use the well-known Apache software available at www.apache.org. At the hardware level, the server 22 comprises a control unit 26 communicating with a data storage unit 28 for storing documents like the hypertext documents 10, 12. At the functional level, the server 22 provides a plurality of server sites 30. Each of the server sites 30 is identified with one top and second level domain like, for example, the domains "foo.de", "baz.de" and "bar.de". Each server site 30 can be considered as a virtual server in itself, having its own unique IP number and providing access to all documents stored at any path location of the corresponding domain. For each server site 30, the control unit 26 analyzes and processes the requests of the browser or client 20, accesses, if necessary, documents in the data storage unit 28, and generates and sends corresponding replies to the client 20.

The client 20 may further access a nameserver 32 via a network 24'. The nameserver 32 is used for mapping host names into the corresponding IP numbers. The nameserver 32 is a complex distributed computer network, and one of the computers contained therein is shown in Fig. 2 with reference numeral 34. In the present sample embodiment, the nameserver 32 implements the Internet DNS (dynamic name service) system. The network 24' is also part of the internet and transmits hostname lookup request using the UDP protocol. The operation of the nameserver 32 is well known per se.

Fig. 2 shows, as an example, the client 20 displaying the first hypertext document 10 in a browser window 36. The contents 14 are displayed as formatted text. The identifying text enclosed in the anchor tags of the hyperlink 16 is shown underlined for designating the presence of a hyperlink. If the user performs a mouse click 38 (shown in fig. 2 as a dotted arrow) on the hyperlink 16, the corresponding hypertext document 12 is called and will be displayed in the window 36.

At the level of abstraction of Fig. 2, this drawing represents prior art systems as well as embodiments of the present invention.

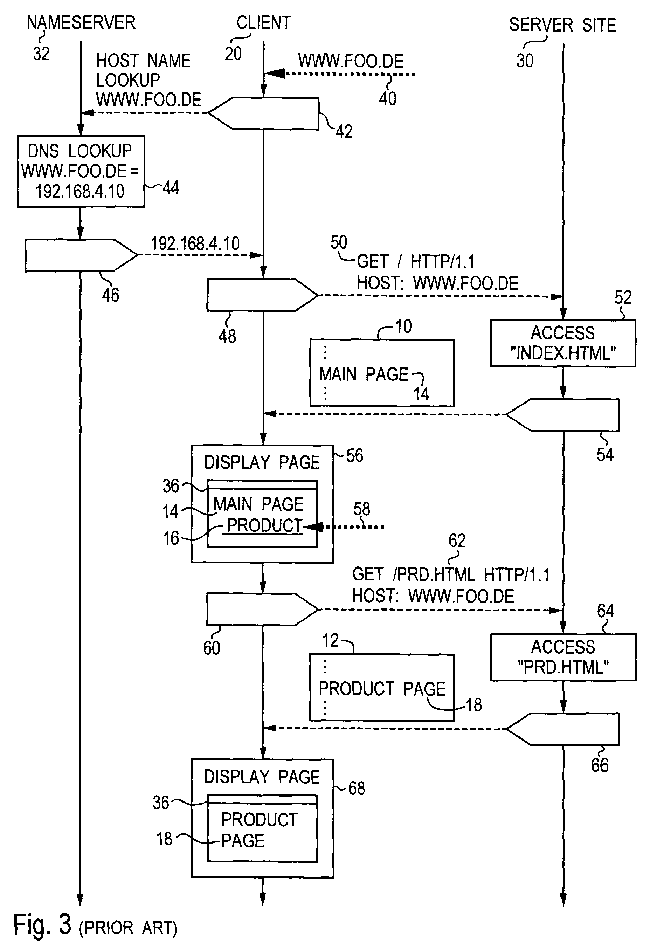

Fig. 3 shows, as an example, a communication sequence according to the prior art between the client 20 and the server site 30. The sequence starts by the user typing the host name "www.foo.de" into an entry field of the browser (user action 40). In response to this user command, the client 20 sends a hostname lookup query to the nameserver 32 in sending action 42. For the sake of simplicity, the preliminary steps of identifying the relevant nameserver 32 have not been shown here. These preliminary steps are well-known per se and are not the subject of the present invention.

In response to receiving the lookup query, the nameserver 32 accesses a zonefile definition in which the host name "www.foo.de" is associated with a particular IP number, in the present example the IP number 192.168.4.10 (step 44). This IP number is sent back to the client 20 (sending action 46). The client 20 then opens a TCP connection to this IP number and sends a first request 50 to the server site 30 (action 48). The first request 50 comprises the request line "GET / http/1.1" and a host header field containing the requested host name, i.e. "www.foo.de", as its value. In the request line the method "GET" designates the kind of request, and "http/1.1" designates the version of the HTTP communication protocol. The interposed character "/" designates an empty file name (file path specification) meaning that the predetermined main page of the server site 30 is requested.

In response to the first request 50, the server 22 accesses the first hypertext document 10 ("index.html") as the main page of the server site 30 (step 52). This first hypertext document 10 ("index.html") is sent to the client 20 in sending action 54, and its contents 14 are displayed by the browser running on the client 20 in the browser window 36 (step 56). This has already been illustrated in Fig. 2.

If the user now performs a mouse click 58 onto the underlined hyperlink 16, a second request 62 is sent to the server site 30 in sending step 60. This second request 62 is similar to the first request 50, but it comprises the file name "prd.html" in the absolute file path specification "/prd.html". This file name has been obtained by the browser from the argument of the HREF attribute of the hyperlink 16. The server 22 receives the second request 62 directed to the IP number of the server site 30 and in response accesses the second hypertext document 12 ("prd.html") in step 64. This document 12 is sent to the client 20 in step 66, and the contents 18 of document 12 are displayed in the browser window 36 in step 68.

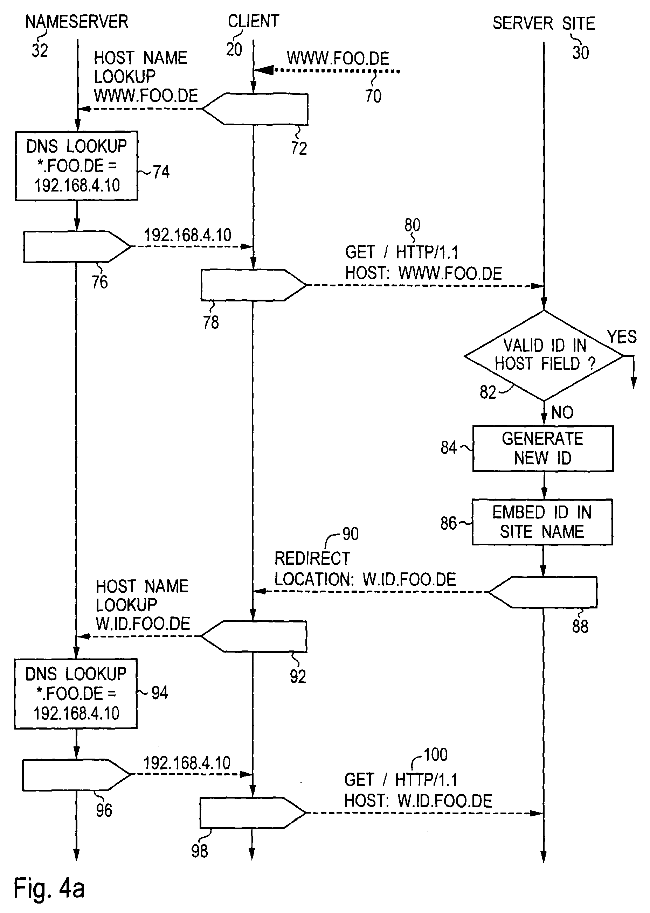

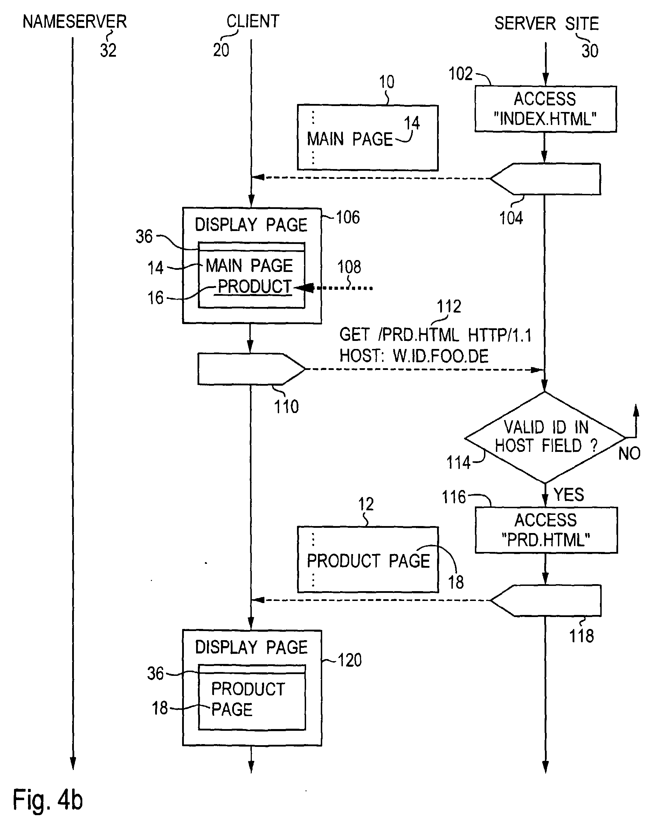

The message sequence diagrams of Fig. 4a and Fig. 4b represent essentially the same sample run as shown in Fig. 3. However, in this case state information is generated, transmitted and preserved between subsequent request/reply pairs.

This feature offers substantial advantages, e.g. in the field of electronic commerce.

The sample run shown in Fig. 4a again starts with a user action 70 in which the user wishes to access the server site named "www.foo.de". A hostname lookup is performed in steps 72 and 74. These steps correspond to steps 42 and 44 of Fig. 3 with the exception that the DNS zonefile of the nameserver 32 contains an entry specifying that all host names having a top level domain "de" and a second level domain "foo" are to be mapped to the IP number 192.168.4.10 irrespectively of the third and any lower level domains given in the host name. The nameserver 32 consequently outputs the IP number 192.168.4.10, which is sent to the client 20 in sending step 76. The browser running on the client 20 generates a first request 80, which is exactly the same as the request 50 shown in Fig. 2, and sends the request 80 to the server site 30 in sending step 72.

Upon receipt of the request 80 at the server site 30, it is first checked in test 82 whether or not the host name supplied as the value of the HTTP host header field contains a valid state information. In the present sample embodiment, the state information would have a predetermined format and would be contained in the third level domain part of the hostname. This third level domain part of the first request 80 is "www", which is not considered to be a valid encoded state information. Therefore the "no" branch of test 82 is chosen, and a new state information (called "id" in the present sample embodiment) is generated in step 84. The state information "id" in the present sample embodiment is a unique alphanumerical identifier.

In the subsequent step 86, the generated state information "id" is embedded in a new site name. Since, in the present sample embodiment, the site name cluster identifying the server site 30 comprises all host names having the top level domain "de", the second level domain "foo" and arbitrary lower level domains, a wide variety of encodings is possible. The sample encoding shown in the present embodiment is a simple textual concatenation using "w" as the fourth level domain part and the state information "id" as the third level domain part. The new host name containing the state information "id" therefore reads "w.id.foo.de".

As the next step 88, a redirection command 90 is sent to the client 20 in the status line of the HTTP reply (status code 3xx). The redirection target is the new host name "w.id.foo.de" containing the state information. Receiving the redirection command 90 causes the client 20 to disregard any further contents of the reply and to direct any further requests to the server site identified by the new host name. The new host name is also displayed in the browser's URL entry field. All in all, the effect of receiving the redirect command 90 is essentially the same as if the user had typed in the new host name "w.id.foo.de" into the browser's URL entry field.

The client 20 will now perform a new host name lookup procedure using the new host name "w.id.foo.de". This host name is sent to the nameserver 32 in sending action 92. As mentioned above, the nameserver 32 is configured in a way to disregard any further host name parts if only the top and second level domains "foo.de" are present. Therefore the DNS lookup step 94 will yield the IP number 192.168.4.10 also for the new host name "w.id.foo.de". This IP number is transferred to the client 20 in step 96.

The client 20 next generates a second request 100 containing the new host name "w.id.foo.de" in the HTTP host header field. This request 100 is sent via the TCP protocol to the IP number 192.168.4.10. The server site 30 is configured in a way corresponding to the zonefile configuration of the nameserver 32. More in detail, the server site 30 will accept all requests directed to the server site's IP number if only the top and second level domain fields of the host name are "foo.de". Lower level domain fields are disregarded. It is a standard feature in many internet server programs like the Apache program mentioned above that an evaluation and test of the host name supplied in the HTTP host header field is possible. The original intention behind this feature was that several distinct server sites could possibly be accessed using a single IP number because of the present shortage of IP numbers. It is an inventive merit of the present inventors to have found a novel way of using this feature for implementing the present invention.

The further steps in the present sample run are shown in Fig. 4b. Similar to the corresponding steps in the prior art method, the first hypertext document 10 is accessed at the server site 30 (step 102) and sent to the client 20 (step 104). The contents 14 of this document are displayed in the browser window 36 in step 106.

When the user follows the hyperlink 16 by means of a mouse click 108, a corresponding HTTP request 112 will be generated and sent to the server site 30 in step 110. This request 112 contains the new host name generated in steps 84, 86 since this name has been preserved by the browser running on the client 20. It is important to note that the HREF attribute of the hyperlink 16 only contains a file path specification and no host name part. The present host name is therefore maintained. The requirement that hyperlinks must not set new host names if the state information shall be preserved is the only restriction imposed by the present sample embodiment on the structure and contents of the hypertext documents. It should further be noted that no processing of the first hypertext document 10 has been necessary for preserving the state information. Thus the present embodiment needs much less computing power of the server 22 than prior art methods. Of course, in alternative embodiments the state information could be used to appropriately modify the first hypertext document 10.

Upon receipt of the HTTP request 112, a check is made by the server site 30 whether or not valid state information is encoded in the host name supplied in the HTTP host header field (test 114). This is assumed in the present situation, and the "yes" branch of test 114 is followed. The further steps of accessing the second hypertext document 12 (step 116), sending it to the client 20 (step 118) and displaying its contents 18 (step 120) are identical to steps 64, 66 and 68 shown in Fig. 3. Again, it should be noted that no real time processing of the second hypertext document 12 is necessary for maintaining the state information, although such processing may be performed for other reasons.

The request/response mechanism shown in Fig. 4b can be continued as often as desired while preserving the encoded state information. It is remarked that the "yes" branch of test 82 in Fig. 4a would roughly correspond to a jump to step 102, and the "no" branch of test 114 in Fig. 4b would roughly correspond to a jump back to step 84. This completes the description of the first sample embodiment.

A second, third, fourth and fifth sample embodiment of the present invention will now be described showing the actual programming code used in possible implementations. For all five sample embodiments described herein, a suitable DNS zonefile record is required that maps all site names contained in the site name cluster into a single IP number. Such a zonefile record for the sample top and second level domain "foo.de" is shown in the following. The parenthesized numbers at the left hand side are just line numbers used for easy reference and are not part of the actual files:

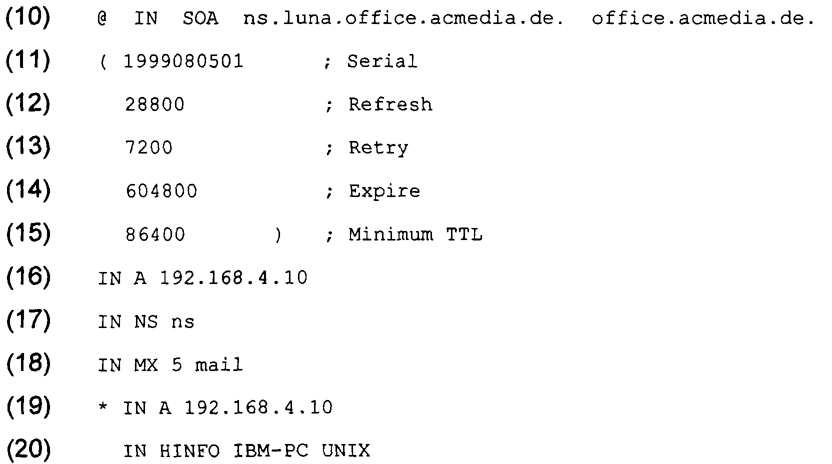

In this zonefile record, line 10 is the standard header and lines 11-15 contain standard timing information. Line 16 is the so-called A record for the domain foo.de, line 17 contains nameserver information, and line 18 contains mail exchange information. The definition in line 19 is the decisive one with respect to the present invention. This definition configures the nameserver 32 such that every host name lookup query for any hostname XXXX.foo.de (where XXXX is an arbitrary character sequence) will be answered by the IP number 192.168.4.10.

The following portions of code concern the second sample embodiment of the invention. This embodiment uses version 1.3.6 or higher of an Apache server program containing the optional modules mod_php and mod_unique. First the Apache webserver is configured to provide a virtual host (corresponding to the server site 30) for the IP number 192.168.4.10 (lines 30-33 and 39). Line 33 defines that this virtual host answers HTTP requests directed to any site name ending in "foo.de" on the HTTP host header field. In other words, this configuration corresponds to that of the nameserver 32 in that the information contained in the third and lower level domain fields of the supplied host name is disregarded. Line 35 specifies that any transmitted document will be processed by a PHP interpreter program. This is important since the functionality of PHP will be used for implementing the invention in the present embodiment. Lines 34 and 36-38 contain administrative information less relevant for understanding the present invention:
(30) NameVirtualHost 192.168.4.10
(31) Listen 192.168.4.10:80
(32) 〈VirtualHost 192.168.4.10:80〉
(33) ServerName *.foo.de
(34) DocumentRoot /usr/local/shop/www/docs/www.foo.de
(35) AddType application/x-httpd-php3 .php3 .html .htm
(36) ErrorLog /usr/local/shop/var/log/httpd-error_log
(37) CustomLog /usr/local/shop/var/log/httpd-access_log BUYWORLD
(38) ServerAdmin webmaster@foo.de
(39) 〈/virtualHost〉

The PHP interpreter program is configured such that a PHP script contained in the file "prepend.inc" will be added before any file that is delivered by the server. This functionality is achieved by the following line 40 in the PHP configuration file "php-ini":
(40) auto_prepend_file = "/usr/local/shop/www/docs/prepend.inc"

The file "prepend.inc" mentioned above contains the following PHP script:

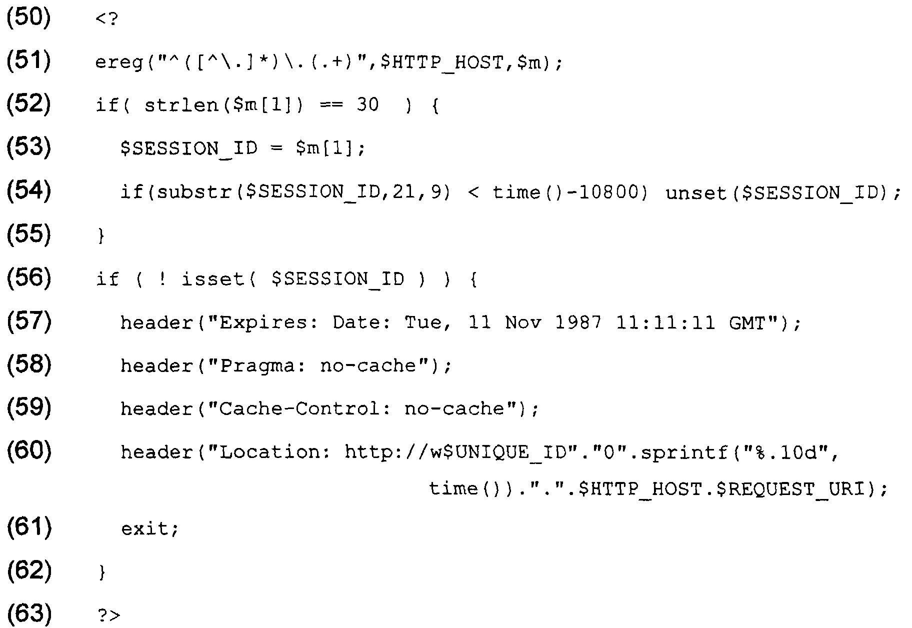

In this PHP script, line 51 extracts the encoded state information from the host name supplied in the HTTP host name field (which is available via the variable $HTTP_HOST). The validity of the state information is checked in lines 52-55 (corresponding to tests 82 and 114 in Fig. 4a and Fig. 4b). In particular, a test as to the format of the state information is made in line 52. Only if the encoded state information comprises exactly 30 characters, a timestamp is extracted in line 54 and a check is made whether or not the lifetime of the state information (10800 seconds in the present example) has expired. Line 54 can be omitted in alternative embodiments in order to obtain an unlimited validity period of the state information.

If no valid state information has been found (line 56), a new host name containing a newly generated unique identifier is sent back to the client 20 in a redirect command (line 60). Referring to Fig. 4a, line 56 corresponds to test 82 ("no" branch), and line 60 corresponds to steps 84 and 86. Lines 57-59 contain additional HTTP header values for preventing an undesired caching on the side of the internet browser. In the case of a redirection, processing of the client's request ends in line 61.

If valid state information has been found, lines 57-61 are skipped and the requested document is sent to the client 20. This corresponds to test 114 ("yes" branch) and steps 116 and 118 in Fig. 4b.

The third sample embodiment will now be described. This embodiment is similar to the second sample embodiment described above in that it also uses the scripts shown in lines 10-20, 30-39 and 40 and the PHP processing feature. However, the file "prepend.inc" contains the following lines 70-82:

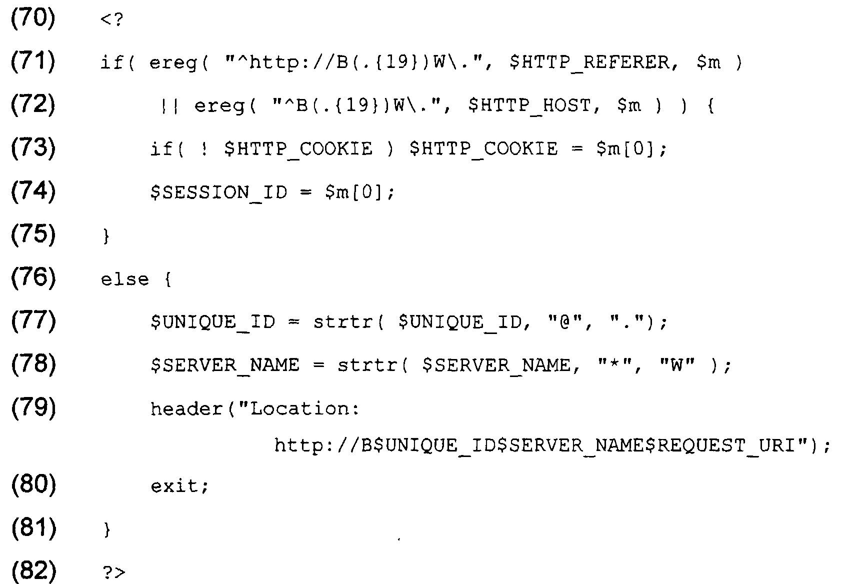

The code in lines 71-72 tests for the presence of encoded state information (having a length of 19 characters) in either the HTTP host header (variable $HTTP_HOST) or the HTTP referrer header (variable $HTTP_REFERER). If such state information is found, it is extracted in lines 71-72 and stored in the variables $HTTP_COOKIE (only if the HTTP cookie header has been empty; see line 73) and $SESSION_ID (line 74). Processing then continues by accessing and sending the requested file to the client 20 (corresponding to steps 116, 118 in Fig. 4b). The extracted state information can be used to modify the file in any desired way using, e.g., the PHP processing possibilities.

Lines 77-80 are executed if no encoded state information has been detected. In this case, a uniquely identifying string having 19 characters is obtained (line 77). This string is further encoded in line 77 by mapping "@" characters to "." characters because the former are not permitted in host names according to the RFC 1035 and RFC 2616 standards. A similar encoding of the server name is made in line 78. Line 79 contains the redirection command to the newly created site name. Processing of the request ends in line 80. All in all, these steps correspond to steps 84-88 shown in Fig. 4a.

The fourth sample embodiment of the invention will now be described. This embodiment is a very general possibility of implementing the present invention in the context of all kinds of page description languages like ASP, SHTML and so on. It is assumed in this embodiment that an internet shop using cookies shall be converted to the method of the present invention. An Apache server program having the optional module "mod_rewrite" is used.

For implementing this fourth sample embodiment, a zonefile record is used as defined in lines 10-20 above. Furthermore the virtual host definition of the Apache program is assumed to contain lines 30-34 and 36-39 given above. The following lines 90-96 are inserted into the virtual host definition at an appropriate place:

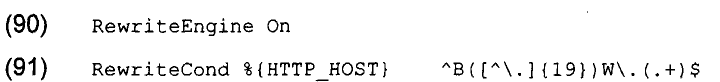

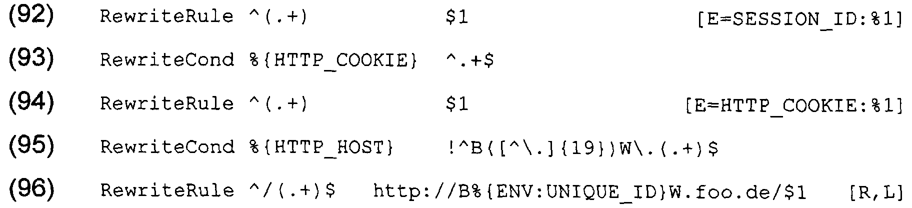

In the first rewrite rule defined in lines 91 and 92, the host name contained in the HTTP host header file is analyzed and any state information contained therein is stored in the variable SESSION_ID. The second rewrite rule (lines 93 and 94) removes and stores any cookie information for further reference. The third and last rewrite rule (lines 95 and 96) concerns the case that no valid state information is found in the host name. Then a redirection command to a newly generated site name is issued. The letter "R" at the end of line 96 indicates the redirection command, and the letter "L" indicates that there are no further rewrite rules. This completes the description of the fourth sample embodiment.

The fifth sample embodiment of the invention is similar to the fourth one. It also uses rewrite rules and allows a very general application of the present invention in connection with a wide variety of page description languages. The difference to the fourth sample embodiment is that lines 91-96 shown above are replaced by the following lines 100-129. In the listing, lines 110-125 are identical to line 109 and have therefore been omitted for the sake of brevity:

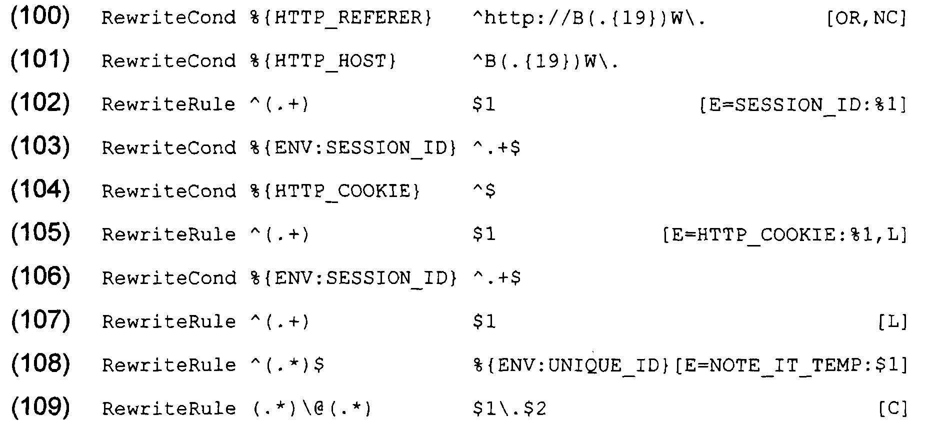

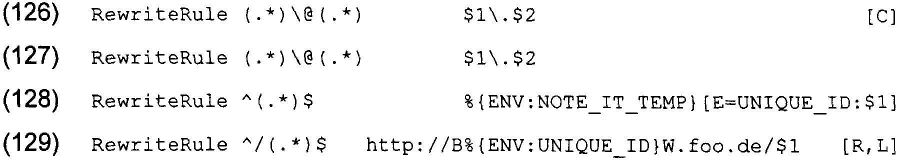

The mode of operation of the fifth sample embodiment corresponds to that of the third sample embodiment shown above, but rewrite rules have been used instead of PHP commands. Encoded state information stored in either the HTTP referrer or the HTTP host header field is found and extracted into the $SESSION_ID variable in lines 100-102. If such information has been found, it is stored in the $HTTP_COOKIE variable (if $HTTP_COOKIE is empty; lines 103-105), and program execution ends (directive "L" in lines 105 and 107).

If no valid state information has been found, a new unique identifier is generated (line 108) and encoded to bring it into conformity with RFC 1035 name space requirements (lines 109-128). Line 129 is identical to line 96 described above and causes redirection to the newly generated host name. This concludes the description of the fifth sample embodiment.

In all sample embodiments described above, the procedure call or variable access "unique_id" was used to obtain a unique identifier. In the presently described embodiments, this procedure call or variable access returns a tightly encoded identifier that is generally meaningless for human beings. In alternative embodiments, however, a different procedure call or variable access is used for obtaining a unique identifier that additionally comprises some meaningful text or consists of meaningful text. For example, an advertising slogan or a greeting message or some information for the user may be contained in the returned identifier. The meaningful text may be unique in that it is selected from a large phrasebook, or it may be made unique by concatenating it with the results of the "unique_id" procedure call or variable access. Consider, as an example, the case that some instance of the procedure call or variable access "unique_id" returns the unique identifier "1234". In the alternative embodiments mentioned in this paragraph, the term "Always-buy-ACME-products-1234" may then be used for generating the new site name to which the user is redirected. This site name will read "Always-buy-ACME-products-1234.foo.de", and it will be displayed in the URL line of the browser window 36 after the redirection has taken place.

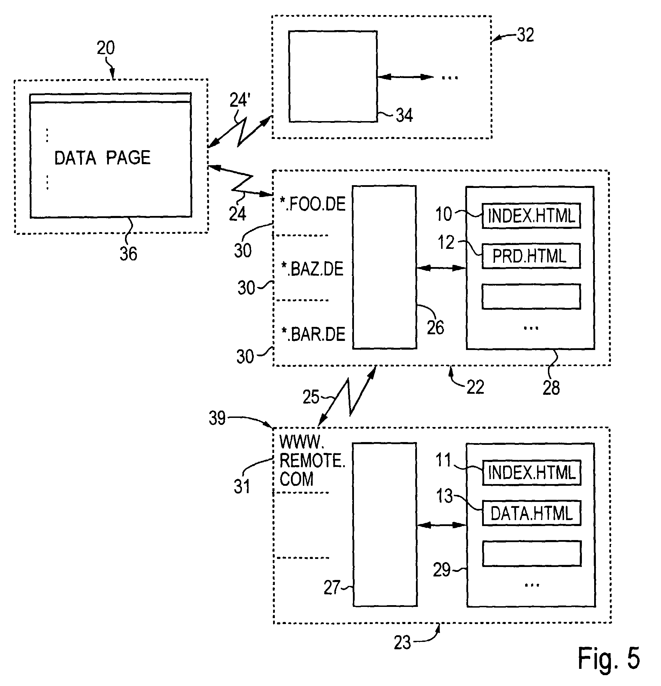

The system shown in Fig. 5 comprises the same client 20, server 22 and nameserver 32 as the system of Fig. 2, and reference is made to the above description of Fig. 2 with respect to these units and their sub-components. The three virtual server sites 30 of the server 22 will respond to all requests containing a host name that ends with the proper first and second level domains, irrespective of any lower level host name parts. This is the same functionality as that of the system of Fig. 2.

Further to the devices already illustrated in Fig. 2, the system of Fig. 5 comprises an external data source 39 in the form of an additional server 23. In the present sample embodiment, the additional server 23 is a general purpose computer remote from the server 22. The server 22 and the additional server 23 are adapted for communicating with each other via a network 25, for example the internet. The additional server 23 comprises, similarly to the server 22, a control unit 27 and a data storage unit 29 for storing documents like a default hypertext document 11 (filename "index.html") and a hypertext document 13 named "data.html". The additional server 23 implements a server site 31 having the site name "www.remote.com". The client 20 shows, in its browser window 36, the contents of the hypertext document 13.

In the present sample embodiment, the additional server 23 providing the data source 39 is a remote computer and the network 25 is the internet. Various alternative embodiments are possible. For example, the additional server 23 may be located in close physical proximity to the server 22, and the network 25 may be a local area network using an internet protocol or any other protocol. It is also possible that the server 22 and the additional server 23 are implemented as two distinct processes (e.g., two Apache server processes) running on a single physical machine, such that the data source 39 is internal rather than external. In yet further alternative embodiments, the data source 39 is formed by one of the virtual server sites 30 of the server 22.

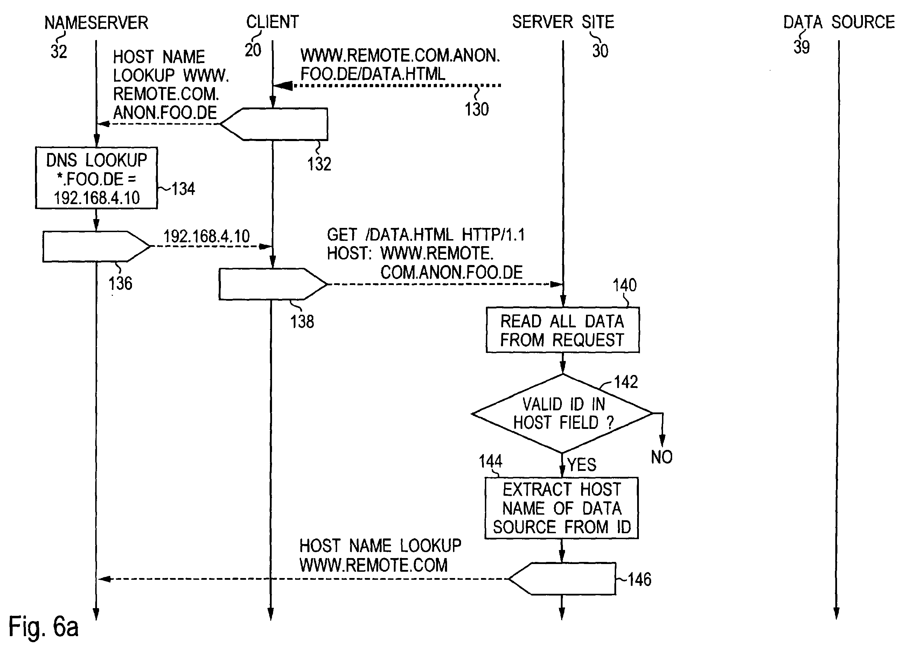

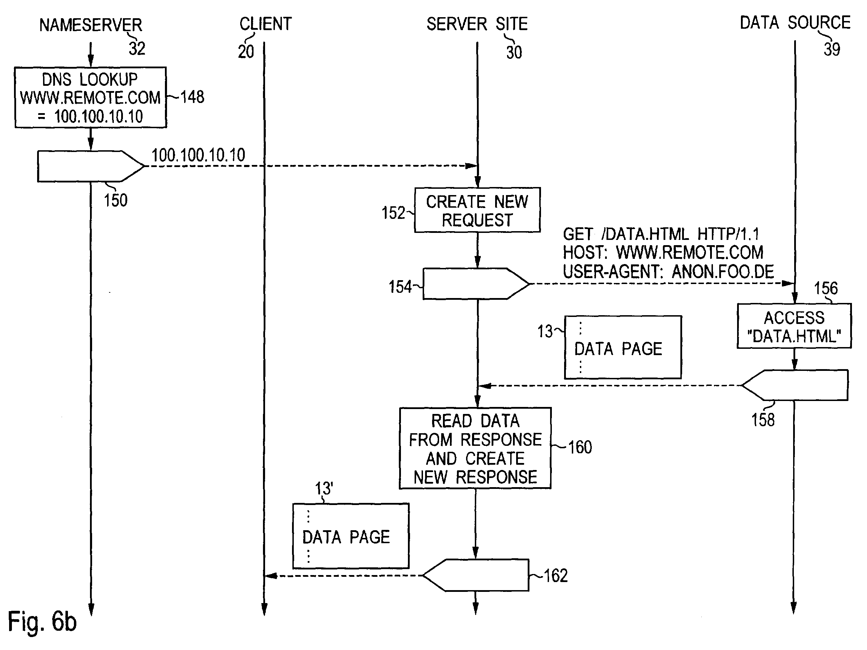

The flow diagram of Fig. 6a and Fig. 6b shows, as an example, how the functionality of an anonymizing agent can be obtained in the system of Fig. 5. The server 22 here acts as an intermediary that processes requests issued by the client 20, forwards the processed requests to the data source 39, receives and processes the replies from the data source 39, and forwards the processed replies to the client 20. The server 22 will remove, when processing the requests, all references that could lead to an identification of the client 20 or the user operating this client 20. The functionality of an "anonymizer" is known per se. However, the present sample embodiment teaches how this functionality can be achieved with very little programming effort.

The sample run of Fig. 6a starts with the user issuing a command to the client 20 to access the document "data.html" via the anonymizer (step 130). The command contains the host name "www.remote.com.anon.foo.de" consisting of the server site part "foo.de" and the state information "www.remote.com.anon". This state information is human readable. It contains two parts, namely "www.remote.com" as the host name of the additional server 23 from which the information shall be obtained and "anon" as a command to the server 22 that the anonymzer functionality is desired. Because of this straightforward structure of the state information, the user is in a position to type the appropriate state information directly into the URL field of the browser window 36 whenever he or she wants to access some internet site anonymously. Of course, it is also possible that the command of step 130 is given by the user following a link on some other internet page or selecting a bookmark stored on the side of the client 20.

Steps 132 to 136 concern the DNS lookup procedure performed by the client 20. These steps correspond to steps 72 to 76 of Fig. 4a. Since the host name entered or accessed by the user ends with the first and second level domain "foo.de", the nameserver 32 returns the corresponding IP number 192.168.4.10 to the client 20. The client 20, in step 138, opens a connection to the IP number received from the nameserver 32 and outputs an HTTP request to the server site 30. This HTTP request corresponds to the command entered by the user in the usual manner, i.e., it contains the file path entered by the user in the request line and the host name entered by the user in the host header. No special configuration of the client 20 or the browser running thereon is necessary.

After receipt of the HTTP request from the client 20, the server 22 reads all data from the request in step 140. This concerns, in particular, the file path data contained in the request line and the contents of all header fields of the request. A test 142 is then made whether or not the host header field contains a valid identifying state information. In the present sample embodiment the state information is defined as valid if it consists of a host name (the host name of the data source 39) and an appended ".anon" identifier. In alternative embodiments, the state information may comprise additional parts like, for example, a session identifier. The validity test 142 in those embodiments corresponds to the tests 82 and 114 described above in connection with Fig. 4a and Fig. 4b, and a new session identifier may be created if the session identifier part of the state information is found to be invalid or missing.

Continuing with the sample run of Fig. 6a, the host name of the data source is now extracted from the identifying state information in step 144. This host name is "www.remote.com" in the present example, and a corresponding host name lookup procedure ensues in steps 146 - 150 (see also Fig. 6b). The server 22 then creates a new request (step 152) in which any information that could identify the user is removed. In particular, most of the header fields of this request will be empty or will contain just a generic name like "anon.foo.de" for the user agent field and/or the referer field. Information that is necessary for accessing the desired data is retained. This concerns the file path of the accessed document ("data.html") and, in the case of a post request, the information that is sent to the additional server 23 with the request (and the corresponding content length header field).

The newly generated request is sent to the data source 39 in step 154, and an access is made in steps 156 to the requested data (in the present sample run, to the hypertext document 13 named "data.html"). This data is transmitted back to the server 22 in step 158. In the following step 160, all headers and the body (content) of the response are read and processed, and a new response for forwarding to the client 20 is generated. This new response, which comprises a modified hypertext document 13', is then sent to the client 20 in step 162 to be displayed in the browser window 36 in the usual way. Depending on the preferences of the user, cookie data contained in the response sent in step 158 may or may not be forwarded to the client 20 in step 162.

In the present sample embodiment, the processing of the response in steps 160 and 162 comprises the steps of replacing all host names in the location header field and in the content part of the response by corresponding host names into which the state information has been inserted. In the present sample run, this means that all host names of the form "http://HOSTNAME" in the response will be replaced by the character sequence "http://HOSTNAME.anon.foo.de". This measure ensures that the user session will continue to be handled by the anonymizing client 20 even if the user follows a link in the modified hypertext document 13' or if the reply of the data source 39 is a redirect command to a new sever site specified in the location header field.

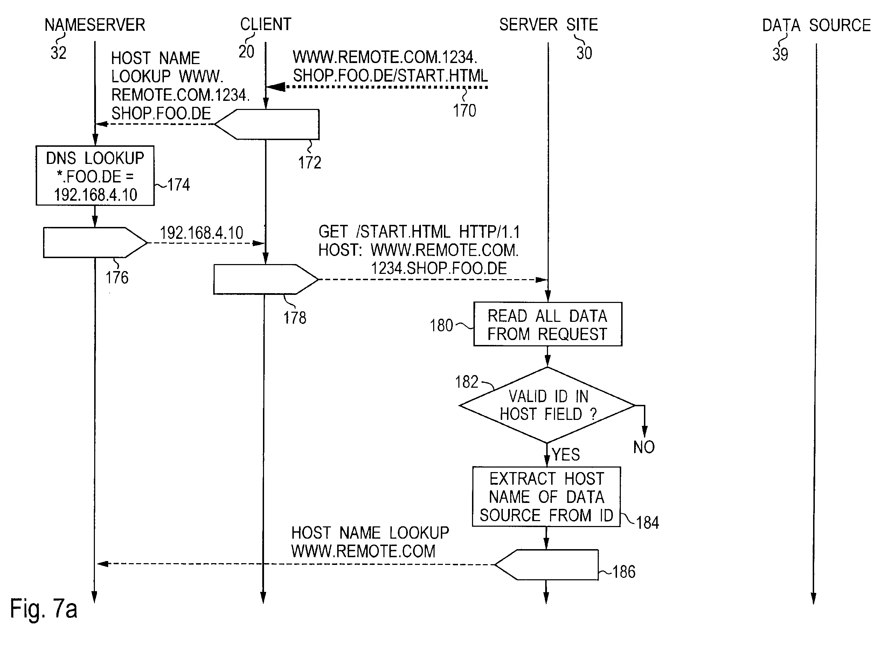

The sample run of Fig. 7a to Fig. 7c concerns an embodiment of the present invention in which a cookie repository is implemented at the server site 30. As mentioned in the introductory section of this document, many users are reluctant to accept cookies at their local computers, while the design of many e-commerce applications is based on the concept of cookies. One of the problems associated with the use of cookies is that they are not deleted at the end of a user session, such that the user has no control over how long or how often some information entered by him or her will be used. This is often undesirable for the user.

In the present sample embodiment, the state information comprises a session identifier, and the cookie data stored at the server site 30 for the user can be accessed and updated by the data source 39 exactly as long as the user session lasts. Thus the present sample embodiment effectively implements "single-session cookies". No security risks are associated with these "single-session cookies" for the user since the information items contained therein have necessarily been obtained during the present user session, and since no data is stored locally at the client 20. Therefore the user has no reason (and, in fact, no possibility) to refuse such "single-session cookies". This means that any e-commerce application requiring cookies will work if it is called via the intermediary server site 30, regardless of the settings of the user's browser running at the client 20. On the other hand, the user is free to achieve the effect of standard "multi-session cookies" by starting a "continued" session with his or her previous session identifier, which may have been stored at the user's browser in the form of a bookmark.

The sample run of Fig. 7a starts with the user, in step 170, selecting such a bookmark that contains the site name "www.remote.com.1234.shop.foo.de". This site name again comprises "foo.de" for identifying the server site 30 and "www.remote.com.1234.shop" as the state information. The state information in turn comprises the session identifier "1234", an identifying site name ("www.remote.com") of the additional data source 39, and the command identifier "shop" specifying that the cookie repository function of the server site 30 is desired. The session and the site name identifiers are, in the present sample embodiment, two distinct portions of the state information for providing a user-readable state information. In other embodiments, the session identifier "1234" alone is used, and an identification of the data source 39 is stored by the server site 30 in connection with further data for this session. Similarly, the command identifier "shop" may also be omitted if the desired functionality is implied by the session data stored by the server site 30 for the session "1234".

Continuing the sample run, a host name lookup procedure is performed in the already described way (steps 172 - 178). After the client 20 has received the IP number of the server site 30, a corresponding request is sent to the server site 30. There all data from the request, in particular the file path specification and the host header, are read in (step 180). It is assumed in the present sample run that the present state information is valid identifying information. Program execution will therefore continue with the "yes" branch of test 182.

It is also possible that no valid identifying information is found in test 182. This may happen if the lifetime of the session identifier has expired or if the user wanted to start a new user session and therefore entered a host name like "www.remote.com.shop.foo.de" (without a session identifier) in step 170. In this case, the "no" branch of test 182 will be taken. Similarly to the procedure shown in steps 82 - 88 of Fig. 4a, and a new session identifier associated with a new (empty) cookie repository will then be created, and a redirect command pointing to a new host name that contains this session identifier will be issued to the client 20.

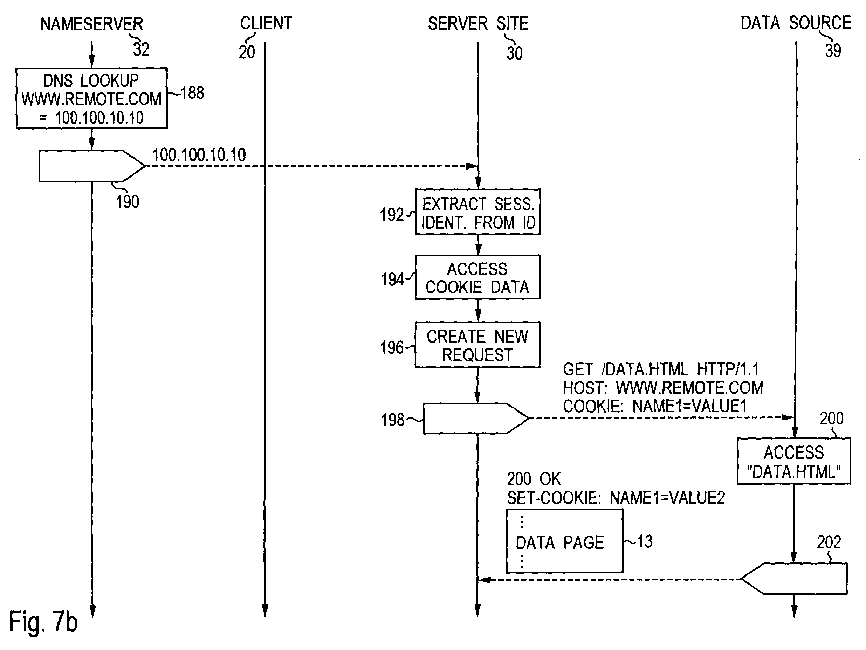

Further continuing with step 184 of Fig. 7a, the host name of the data source 39 requested by the user is determined from the valid identifying information in the host header field of the request. A further host name lookup process ensues in steps 186 - 190 (see also Fig. 7b), and the IP number of the host providing the data source 39 is communicated to the server site 30. The server 22 will also, in step 192, determine the session identifier or user name from the identifying information, and will access the corresponding cookie repository (step 194). This repository is contained in the local data storage unit 28 of the server 22. For each valid session identifier, the repository contains the same cookie information that would otherwise be stored locally at the client 20. Cookies themselves are a well-known concept, and reference is made to the information available at http://developer.netscape.com/docs/manuals/js/client/jsref/cookies.htm for a discussion of their use and their implementation in common browsers.

The server 22 next creates a new request directed to the data source 39 in step 196. This request contains the file path specification (and possible further information) from the original request of the client 20, a host header corresponding to the host name taken from the identifying state information, and all applicable cookie information available at the server site 30 for the present user session and the present file path.

The request is sent to the data source 39 in step 198, and it is processed by the data source 39 in the usual way. In particular, any cookie information contained in the request is evaluated. In the present sample run, the additional server 23 then accesses the hypertext document 13 having the file path "data.html" (step 200) and creates a corresponding response. The response, which is sent back to the server site 30 in step 202, may contain the usual commands to modify or update the cookie information, e.g., in a set-cookie header field. All in all, the data source 39 will communicate with the server site 30 in the same way as if the server site 30 was an internet client with enabled cookie functions.

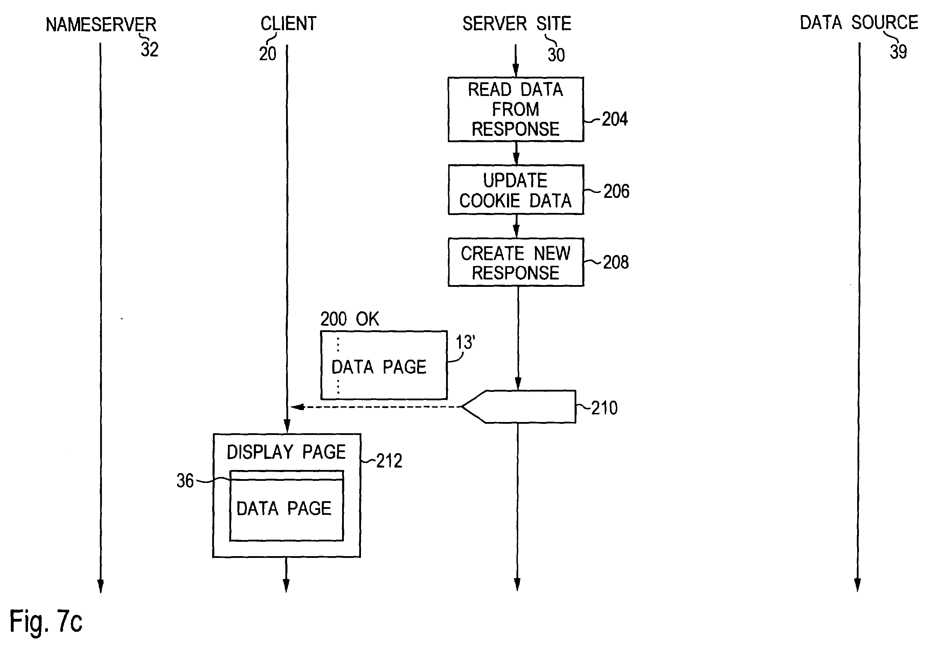

Upon receipt of the response, the server site 30 reads the response data, i.e., the status line, headers and body in step 204 (see Fig. 7c). Any set-cookie headers will be processed by updating the corresponding cookie data in the local cookie repository (step 206). The server site 30 then creates a new response (step 208) for forwarding to the client 20 (step 210). No set-cookie headers are present in the new response. In the present sample embodiment, the hypertext document 13' sent to the client 20 differs from the hypertext document 13 in that the present state information will be inserted into all host names appearing in this documents. A similar modification is made to any location headers of a redirect command. The possibly modified hypertext document 13' is then displayed to the user by the client 20.

This process is repeated, starting again at step 170, whenever the user follows a link in the modified hypertext document 13' that includes the present state information. The updated cookie data (step 206) will be used in the next repetition of the process as long as the present user session is continued, i.e., the appropriate user session identifier is given in the requests sent by the client 20.

In the sample embodiments described above with reference to Fig. 6a, Fig. 6b and Fig. 7a to Fig. 7c, the contents of the hypertext pages received from the data source 39 were only modified to that extent required for the desired functionality. In other embodiments, however, further modifications are made. It is generally possible that the server site 30 performs any kind of processing for filtering the data contained in the requests and/or the responses. This filtering may concern the data contained in the request/response headers and/or the message bodies. For example, it is possible to include advertising banners selected by the server site 30 in the modified hypertext documents 13'. The new advertising banners may either replace original advertisements contained in the hypertext documents 13, or they may be inserted in addition. Some revenue may be generated in this way, thus making a free anonymizing or cookie repository service possible.

It can thus be seen that the invention can be used for providing state information in a stateless data communication protocol in a convenient and flexible way requiring very little effort. The particulars contained in the above description of sample embodiments should not be construed as limitations of the scope of the invention, but rather as exemplifications of preferred embodiments thereof. Many other variations are possible and will be readily apparent to persons skilled in the art. For example, while several distinct sample embodiments of the present invention have been explained above, it is apparent that a multitude of combinations of the features described in these sample embodiments and in the introductory part of this specification are possible. Accordingly, the scope of the invention should be determined not by the embodiments illustrated, but by the appended claims and their legal equivalents.

## Claims

1. A method for providing state information in a data communication protocol, said state information being provided between a client (20) and a server site (30), said server site (30) being accessible at each of a cluster of site names, said method comprising the step of using one site name of said cluster of site names for accessing said server site (30), said site name containing the encoded state information.

2. The method of claim 1, wherein said server site (30) is identified by an address, preferably an internet IP address, said method comprising the further steps of:
- providing a nameserver (32), preferably an internet DNS nameserver, with said site name containing said encoded state information,
- receiving said address of said server site (30) from said nameserver (32), and
- contacting said server site (30) at said address and supplying said site name containing said encoded state information to said server site (30), said site name preferably being supplied to said server site (30) in an HTTP header field.

3. A method for providing state information in a data communication protocol, said state information being provided between a client (20) and a server site (30), said server site (30) being accessible at each of a cluster of site names, said method comprising the steps of:
- receiving one site name of said cluster of site names, said site name containing the encoded state information, said site name preferably being received in an internet host header field, and
- extracting said state information from said site name.

4. The method of claim 3, further comprising the step of using said extracted state information for providing information depending on said state information to said client (20).

5. The method of claim 3 or claim 4, wherein said state information comprises information defining a site name of a data source (39), said method further comprising the steps of:
- determining said site name of said data source (39) from at least said state information,
- using said determined site name of said data source (39) for contacting said data source (39) and for requesting information from said data source (39),
- receiving said information from said data source (39), and
- sending a response to said client (20), said response comprising information that is at least partially identical to or at least partially derived from said information received from said data source (39)

6. The method of claim 5, wherein said information is requested from said data source while keeping the identity of said client (20) and/or the user of said client (20) anonymous.

7. The method of claim 5, wherein said server site (30) maintains a repository of cookie data for said client (20), said cookie data being accessed and updated in said requesting and said receiving of said information from said data source (39).

8. The method of one of claims 1 to 7, wherein said data communication protocol is a stateless data communication protocol and/or an internet data communication protocol and/or the internet HTTP protocol.

9. The method of one of claims 1 to 8, wherein said data communication protocol uses a hierarchical site name system, and wherein the portions of all site names in said cluster of site names starting from the top hierarchy level down to a predetermined hierarchy level either are identical or are contained in a predetermined set of site name portions.

10. The method of one of claims 1 to 9, wherein said site name is an internet host name and/or wherein said state information is encoded into said site name in a human-readable way.

11. The method of one of claims 1 to 10, wherein said state information comprises information for identifying the user and/or commercial information related to the user and/or information regarding the validity of said state information and/or information regarding a further data source (39) and/or information specifying a data processing operation done by the server site (30).

12. A computer program product for execution by a general purpose computer for providing state information in a stateless data communication protocol, said computer program product including instructions for making said general purpose computer perform the steps of the method of one of claims 1 to 11.

13. An apparatus comprising at least one general purpose computer programmed for performing the steps of the method of one of claims 1 to 11.
